(19) **Europäisches Patentamt / European Patent Office / Office européen des brevets**

(11) **EP 2 784 357 B1**

(12) **EUROPEAN PATENT SPECIFICATION**

(45) Date of publication and mention of the grant of the patent:
**17.02.2016 Bulletin 2016/07**

(51) Int Cl.:
*F16H 61/662* $^{(2006.01)}$    *F16H 63/06* $^{(2006.01)}$
*F16H 9/18* $^{(2006.01)}$    *F16H 55/56* $^{(2006.01)}$

(21) Application number: **14162156.5**

(22) Date of filing: **28.03.2014**

(54) **V-belt continuously variable transmission**

Stufenlos einstellbares Keilriemengetriebe

Transmission variable continue à courroie en V

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2013 JP 2013072161**
**29.03.2013 JP 2013072472**

(43) Date of publication of application:
**01.10.2014 Bulletin 2014/40**

(73) Proprietor: **Musashi Seimitsu Industry Co., Ltd. Toyohashi-shi, Aichi 441-8560 (JP)**

(72) Inventors:
• **Shigihara, Akira**
**Kumamoto (JP)**

• **Okamoto, Teruhisa**
**Toyohashi-shi, Aichi (JP)**
• **Atsumi, Takashi**
**Toyohashi-shi, Aichi (JP)**
• **Nishimura, Manabu**
**Toyohashi-shi, Aichi (JP)**
• **Sato, Yuri**
**Toyohashi-shi, Aichi (JP)**
• **Yamamoto, Toshiaki**
**Toyohashi-shi, Aichi (JP)**

(74) Representative: **Intès, Didier Gérard André et al Cabinet Beau de Loménie 158, rue de l'Université 75340 Paris Cedex 07 (FR)**

(56) References cited:
**JP-A- 2004 278 725    JP-A- 2009 079 759 JP-A- 2012 047 292**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

The present invention relates to a V-belt continuously variable transmission (CVT) provided with an actuator for moving a movable sheave member.

Heretofore, there have been proposed various constructions for transmissions that transmit output rotations of an engine to a drive wheel after appropriately changing the number of the output rotations. Particularly, recent years have seen widespread use of V-belt continuously variable transmissions that include, as their fundamental components, a drive pulley, a driven pulley and a V-belt. The drive pulley,and the driven pulley each comprise a fixed sheave member and a movable sheave member. The closest prior art Japanese Patent Application JP 2012-47292 A and JP. 2009-79759 A (hereinafter referred to as "Patent Literature 1" and "Patent Literature 2", respectively), for example, disclose a transmission that moves the movable sheave member via an actuator.

The actuator disclosed in Patent Literature 1 moves an output rod by drive force of a motor so that the output rod pushes or pulls a movable sheave holder to thereby move the movable sheave member in a desired direction. The movable sheave member is normally biased toward the fixed sheave member by a centrifugal weight as well. Namely, the transmission disclosed in Patent Literature 1 is characterized by moving the movable sheave member by a combined action of the centrifugal weight and the actuator.

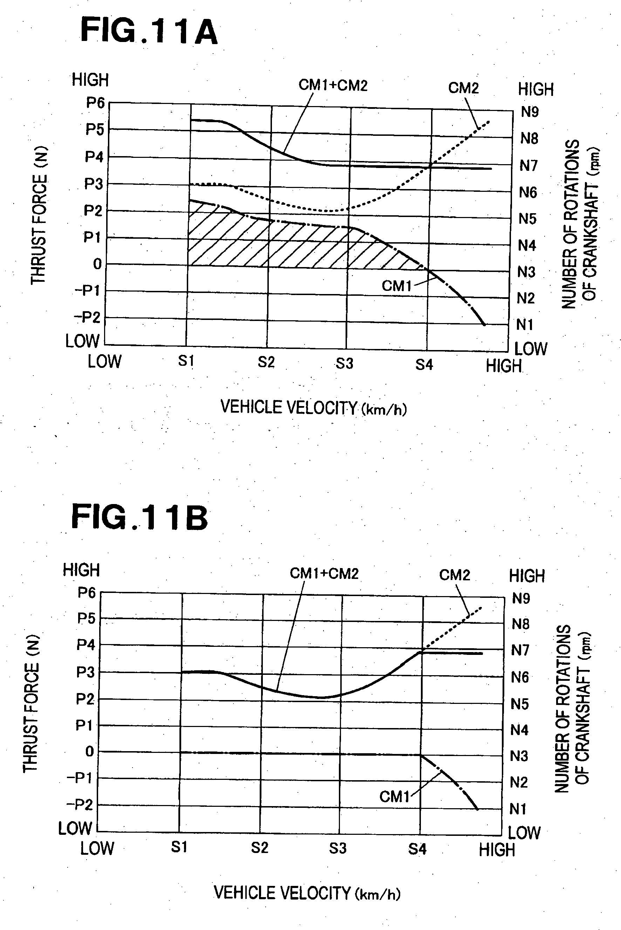

Figs. 11A and 11B are diagrams explanatory of behavior of the V-belt continuously variable transmission disclosed in Patent Literature 1 (Japanese Patent Application Laid-open Publication Nos. 2012-47292), of which Fig. 11A shows the behavior in an ordinary mode and Fig. 11B shows the behavior in a sport mode. In these figures, CM1 represents thrust force with which the movable sheave member is urged or driven toward the fixed sheave member via the actuator, CM 2 represents thrust force with which the movable sheave member is driven toward the fixed sheave member via a centrifugal weight, and CM1+CM2 represents a total or sum of the thrust force CM1 and the thrust force CM2.

In the ordinary mode shown in Fig. 11A, the thrust force CM1 of the actuator is greater than zero (0) in a shift-up region at and below vehicle velocity "S4 km/h". Namely, in the ordinary mode, the movable sheave member is positively driven toward the fixed sheave member by the thrust force CM 1 of the actuator, so as to permit a smooth and prompt shift-up. As a result, fuel efficiency can be enhanced.

In the sport mode shown in Fig. 11B, on the other hand, the thrust force CM1 of the actuator is zero in the shift-up region at and below vehicle velocity "S4 km/h". Namely, in the sport mode, even at the time of shift-up, shift-up is restrained as compared to that in the ordinary mode, because the actuator is not caused to function. As a result, accelerating performance is enhanced, and hence sports travel of the vehicle is permitted.

But, the transmission disclosed in Patent Literature 1 requires improvements with rest to the following points. First, in the sport mode shown in Fig. 11B, the actuator is not utilized effectively at the time of shift-up. Second, in the ordinary mode shown in Fig. 11A, it is necessary for the actuator to generate thrust force of P2 or more at the time of shift-up and a capacity of the motor is determined on the basis of this necessary thrust force, with the result that the motor would inevitably become large in size.

However, it has been desired to reduce the size and weight of the motor in view of needs for reduction in weight, size and cost of the transmission and enhancement of fuel efficiency. If the motor can be reduced in size, it will become possible to achieve the reduction in weight, size and cost of the transmission and enhancement of fuel efficiency of the transmission.

Further, in the actuator disclosed in Patent Literature 2, a fork member is pivotally moved, by a screw shaft of a ball screw, to move the movable sheave member. A sensor is assembled to the actuator to provide a unit of the actuator and the sensor. A displaced amount of the screw shaft is detected by the sensor, and the movement of the movable sheave member is controlled on the basis of the sensor-detected displaced amount of the screw shaft.

If the actuator and the sensor are unitized as above, the actuator would become large in size, although ease of assembly and maintenance can be enhanced because a plurality of component parts is combined together. Further, because the displaced amount of the screw shaft is detected by the sensor, position detection accuracy of the movable sheave member would be adversely influenced by dimension errors and assembly errors of various component parts disposed between the screw shaft and the movable sheave member.

Thus, in recent years, there have been high demands for size reduction of the actuator and position detection accuracy enhancement of the movable sheave member in view of growing needs for size reduction of the transmission and enhancement of fuel efficiency of the transmission.

In view of the foregoing prior art problems, it is an object of the present invention to provide an improved V-belt continuously variable transmission which can be effectively reduced in size by achieving size reduction of the actuator including the motor and position detection accuracy enhancement of the movable sheave member.

In order to accomplish the above-mentioned object, the present invention provides an improved V-belt continuously variable transmission including the features of claim 1.

Namely, the motor is caused to function not only as a thrust assist but also as a brake, and thus, the actuator can be utilized effectively in the two gear change modes. Thus, the capacity and size of the motor can be reduced, as a result of which the overall size, weight and cost of the transmission can be effectively reduced and, in addition, enhanced fuel efficiency of the transmission can be achieved.

Preferably, in the V-belt continuously variable transmission of the present invention, the actuator includes a feed screw mechanism for converting rotational output of the motor into linear motion, and mass of the centrifugal weight is set on the basis of screw efficiency of the feed screw mechanism. In ball screws, forward efficiency (i.e., efficiency with which rotational motion is converted into linear motion) and backward efficiency (i.e., efficiency with which linear motion is converted into rotational motion) of their screw efficiency are substantially equal to each other, whereas, in other ordinary screws than such ball screws, the backward efficiency is smaller than the forward efficiency. Thus, in a case where the feed screw mechanism comprises such an ordinary screw, necessary torque of the motor in the second gear change mode can be reduced as compared to that in a case where the feed screw mechanism comprises a ball screw. Note that the term "ordinary screw" as used herein refers to any other suitable type of screw than a ball screw, such as a trapezoidal screw, triangular screw or square screw.

According to the present invention, a load on the motor can be reduced in one of the first and second gear change modes, and thus, it is possible to even further reduce the size of the motor and hence the overall size of the transmission by appropriately changing the mass of the centrifugal weights, in accordance with a reduced amount of the motor load, to thereby reduce a load on the motor in the other of the first and second gear change modes.

Preferably, in the V-belt continuously variable transmission of the present invention, the feed screw mechanism comprises a screw (i.e., ordinary screw) whose backward efficiency of the screw efficiency is smaller than the forward efficiency of the screw efficiency, and, in the second gear change mode, the thrust force of the centrifugal weight is resisted using the backward efficiency of the screw. Thus, in the second gear change mode, the necessary torque of the motor in the second gear change mode can be reduced, so that the motor can be reduced in size. Further, the ordinary screw is less expensive and has a greater impact resistance and durability than the ball screw, as a result of which it is possible to provide an inexpensive and yet sturdy actuator.

Preferably, in the V-belt continuously variable transmission of the present invention, the mass of the centrifugal weight is set such that necessary torque of the motor in the first gear change mode and necessary torque of the motor in the second gear change mode substantially equal each other. The necessary torque of the motor in the first and second gear change modes can be reduced in a well-balanced manner, with the result that the motor can be even further reduced in size and thus the overall size of the transmission can be ever further reduced.

Preferably, in the V-belt continuously variable transmission of the present invention, the feed screw mechanism comprises a ball screw whose forward efficiency and backward efficiency of the screw efficiency are substantially equal to each other, and the mass of the centrifugal weight is set such that the additional thrust force and the resistant thrust force generated by the actuator substantially equal each other. Thus, the necessary torque of the motor in the first and second gear change modes can be reduced in a well-balanced manner, with the result that the motor can be even further reduced in size. Further, because both the forward and the backward efficiency of the ball screw is high, the motor can be even further reduced in size, and thus, the overall size of the transmission can be ever further reduced.

Preferably, the V-belt continuously variable transmission of the present invention further comprises: a transmission case accommodating therein the fixed sheave member, the movable sheave member and the V-belt; an arm connected to the movable sheave member via a bearing, the actuator moving the movable sheave member via the arm; and a sensor for detecting a displaced amount of the arm that moves together with the movable sheave member, the sensor being accommodated in the transmission case separately from (i.e., not integrally with) the actuator.

Because the sensor is accommodated in the transmission case separately from (i.e., not integrally with) the actuator, the actuator can be reduced in size. Further, because the displaced amount of the arm is detected by the sensor, positioning of the sensor within the transmission case can be designed freely in accordance with a shape of the arm, so that a dead-space within the transmission case can be utilized effectively. As a result, the overall size of the V-belt continuously variable transmission of the present invention can be effectively reduced.

Furthermore, because the displaced amount of the arm moving with the movable sheave member is detected by the sensor, the position of the movable sheave member can be detected with high accuracy without being adversely influenced by dimension errors and assembly errors of various component parts. As a result, movement of the movable sheave member can be controlled with high accuracy, and enhanced fuel efficiency of the V-belt continuously variable transmission can be achieved.

Preferably, in the V-belt continuously variable transmission of the present invention, the sensor is disposed in a region within the transmission case that is located opposite from the actuator with the V-belt interposed between the sensor and the actuator. Namely, the actuator is disposed off an operational trajectory of the V-belt to avoid interference with the V-belt. Therefore, a space within the transmission case that is located opposite from the actuator with the V-belt disposed inbetween tends to become a dead space. Thus, by positioning the sensor in that space, the dead space can be utilized effectively.

Further, preferably, in the V-belt continuously variable transmission of the present invention, the sensor includes a lever, and a biasing member normally biasing the lever in abutting engagement with the arm, the lever being abutted against the arm in a direction opposite from a direction where the arm is assembled to the transmission case. Thus, at the time of assembly of the sensor and the arm to the transmission case, it is only necessary to first assemble the sensor to the transmission case and then assemble the arm to the transmission case without a need for interconnecting the lever and the arm. As a result, the present invention can achieve enhanced ease of assembly and maintenance, as well as cost reduction because the lever and the arm need not be interconnected.

Further, preferably, the V-belt continuously variable transmission of the present invention further comprises a bracket fixing the sensor to the transmission case, and the bracket integrally has a stopper for preventing the movable sheave member from moving beyond a regular use range. Thus, it is possible to reduce the number of necessary component parts and hence necessary cost as compared to a case where the stopper is provided separately from the bracket.

Further, preferably, the V-belt continuously variable transmission of the present invention further comprises a bracket fixing the sensor to the transmission case, and the bracket integrally has an anti-rotation section for preventing the arm from pivoting about the bearing beyond a predetermined range. Thus, assembly of the arm and the actuator can be facilitated, so that ease of assembly and maintenance can be enhanced. Besides, it is possible to reduce the number of necessary component parts and hence necessary cost as compared to a case where the anti-rotation section is provided separately from the bracket.

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will be described in detail below, by way of example only, with reference to the accompanying drawings, in which:

Fig. 1 is a sectional view showing an embodiment of a V-belt continuously variable transmission of the present invention;
Fig. 2 is an enlarged fragmentary view of an actuator shown in Fig. 1;
Fig. 3 is an enlarged fragmentary view of a section indicated by "3" in Fig. 2;
Fig. 4 is a sectional view showing behavior of the embodiment of the V-belt continuously variable transmission of the present invention;
Figs. 5A and 5B are diagrams explanatory of behavior of an actuator and centrifugal weights in the embodiment, of which Fig. 5A shows the behavior in an eco mode while Fig. 5B shows the behavior in a sport mode;
Fig. 6 is an exploded perspective view of a sensor provided in the embodiment;
Fig. 7 is a sectional view showing a modification of the V-belt continuously variable transmission of the present invention;
Fig. 8 is a sectional view showing on an enlarged scale part of the actuator show in Fig. 7;
Fig. 9 is a sectional view taken along line 9 - 9 of Fig. 8;
Fig. 10 is a view showing a behavior of a flat spiral spring of Fig. 9; and
Figs. 11A and 11B are diagrams explanatory of behavior of a conventionally-known V-belt continuously variable transmission.

First, an embodiment of a V-belt continuously variable transmission 10 of the present invention will be outlined below. The V-belt continuously variable transmission 10 is particularly suited for application to scooter-type vehicles, although it may also be applied to other two-wheeled vehicles, three-wheeled vehicles and four-wheeled vehicles.

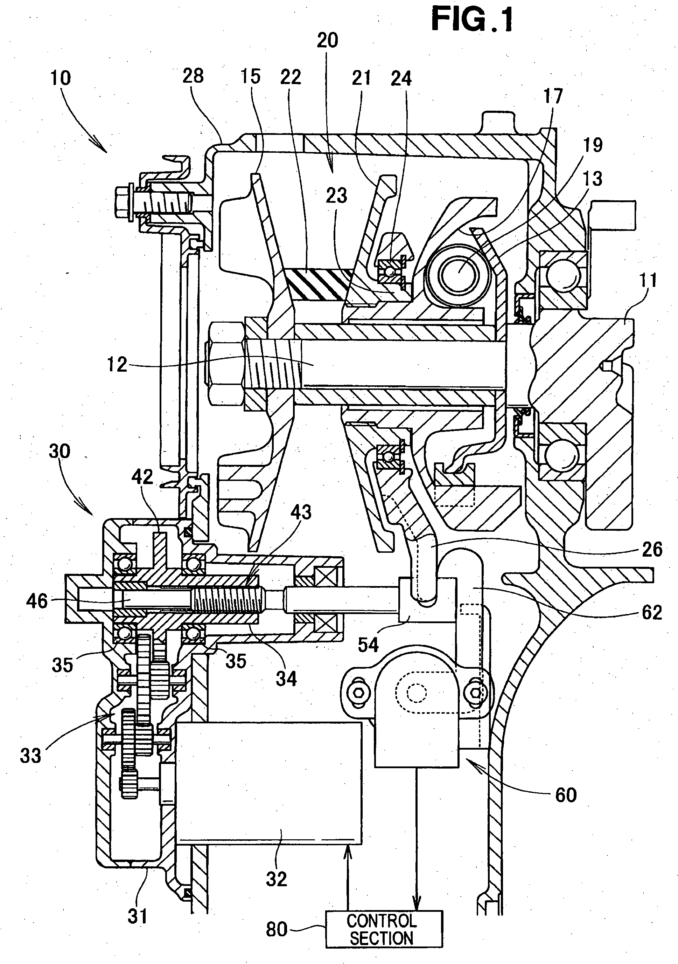

As shown in Fig. 1, the V-belt continuously variable transmission 10 includes a pulley shaft 12 formed integrally at one end of a crankshaft 11, a drive pulley 20 supported or mounted on the pulley shaft 12, a not-shown driven pulley, and a V-belt 22 wound on and extending between the drive pulley 20 and the driven pulley. The drive pulley 20 includes a fixed sheave member 15 fixedly mounted on the pulley shaft 12 and a movable sheave member 21 mounted on the pulley shaft 12 in opposed relation to the fixed sheave member 15 and for axial movement relative to the fixed sheave member 15, and the V-belt 22 is wound between the fixed and movable sheave members 15 and 21.

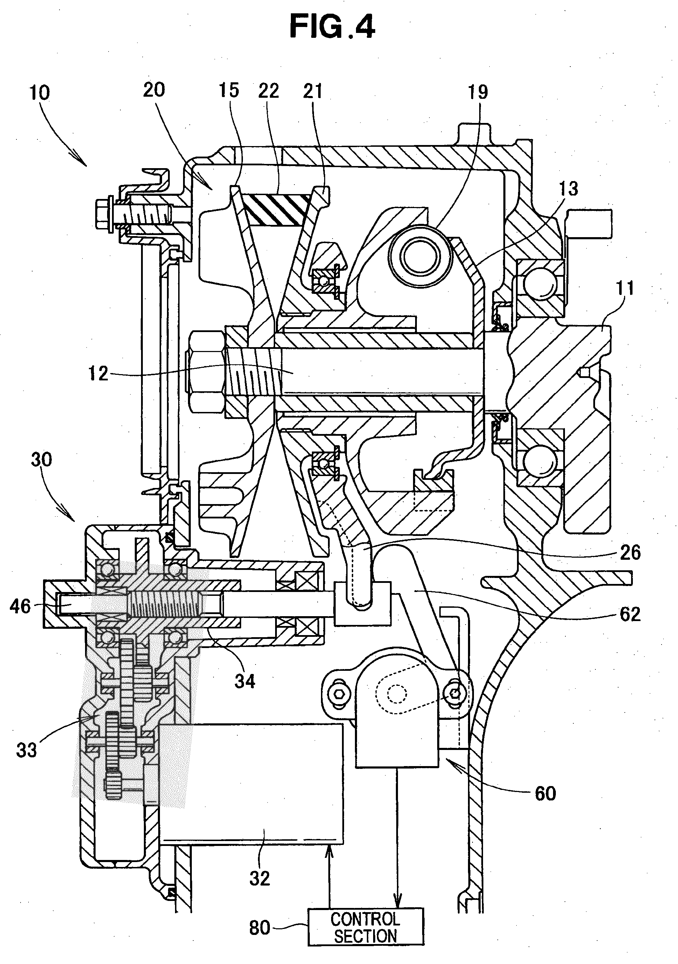

A ramp plate 13 is fixedly mounted on the pulley shaft 12 behind the movable sheave member 21. A plurality of centrifugal weights 19 are held between the movable sheave member 21 and the ramp plate 13. As the pulley shaft 12 rotates and centrifugal force corresponding to a rotating speed of the pulley shaft 12 acts on the centrifugal weights 19, the centrifugal weights 19 move the movable sheave member 21 toward the fixed sheave member 15 while sliding moving radially outward along a cam surface 17 of the movable sheave member 21 (see Fig. 4). As a consequence, a distance between the fixed sheave member 15 and the movable sheave member 21 decreases, so that a winding diameter of the V-belt 22 increases.

Further, of the movable sheave member 21, a sliding surface along which the V-belt 22 slides and the cam surface 17 are constructed of separate component parts, and an arm 26 is connected, via a bearing 24, to a boss section 23 located between the belt-sliding surface and the cam surface 17. To the distal end of the arm 26 is connected an output rod 46 of an actuator 30 that moves the movable sheave member 21 in conjunction with the centrifugal weights 19.

The actuator 30 includes a motor 32 as its drive source, a reduction gear group 33 for reducing the number of output rotations of the motor 32, and a nut member 34 rotationally driven by the motor 32 via the reduction gear group 33.

The reduction gear group 33 comprises, for example, six gears, of which the final-stage gear 42 is formed integrally on the nut member 34. The nut member 34 is rotatably supported within an actuator case 31 via a pair of ball bearings 35 axially opposed to each other with the gear 42 interposed therebetween. Thus, force received by the gear 42 can be effectively transmitted to the actuator case 31 via the ball bearings 35.

In the illustrated embodiment, the actuator case 31 having the nut member 34 etc. accommodated therein is provided separately from (i.e., not integrally with) a transmission case 28, and thus, in this case, what supports the nut member 34 is the actuator case 31. Alternatively, however, the actuator case 31 and the transmission case 28 may be provided integrally with the transmission case 28; in this case, what supports the nut member 34 is the transmission case 28.

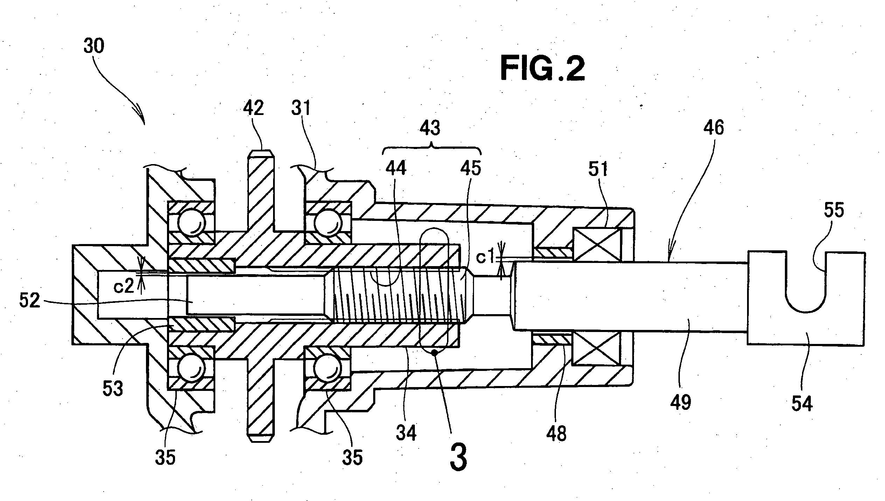

As shown in Fig. 2, the actuator 30 further includes the output rod 46 having a trapezoidal male screw 45 meshing with a trapezoidal female screw 44 formed in the inner peripheral surface of the nut member 34. One end portion 49 of the output rod 46 projecting outwardly through the actuator case 31, and a U-shaped groove 55 for connection thereto of the arm 26 (Fig. 1) is formed in a distal end region 54 of the one end portion 49. Further, the one end portion 49 of the output rod 46 is supported by a first bearing 48 provided on the actuator case 31, while another end portion 52 of the output rod 46 opposite from the one end portion 49 with the trapezoidal male screw 45 disposed therebetween is supported by a second bearing 53 provided on the nut member 34. Note that an opening of the actuator case 31 through which the one end portion 49 of the output rod 46 projects is sealed with a seal 51 formed of synthetic rubber.

The output rod 46, having the trapezoidal male screw 45 formed on a substantial axially-middle region of the output rod 46 between the one and other end portions 49 and 52, is a multi-step shaft structure where the outer diameter of the trapezoidal male screw 45 is smaller than the outer diameter of the one end portion 49 and where the outer diameter of the other end portion 52 is smaller than the outer diameter of the trapezoidal male screw 45.

A radial gap c1 is formed between the one end portion 49 of the output rod 46 and the first bearing 48, and a radial gap c2 is formed between the other end portion 52 of the output rod 46 and the second bearing 53.

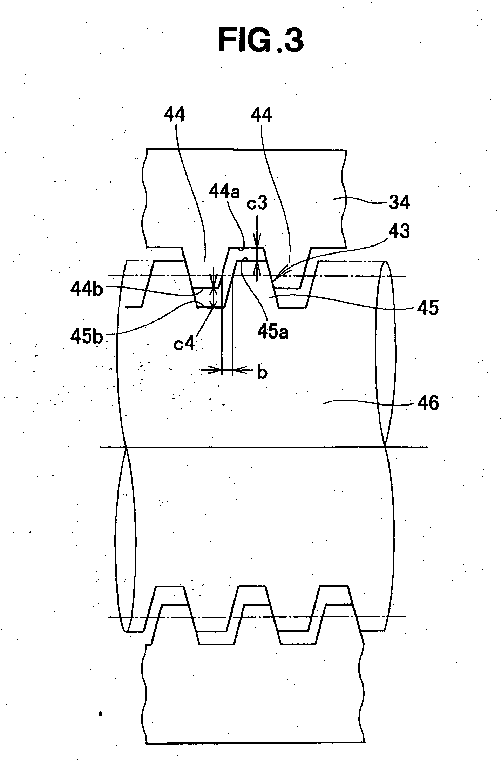

As schematically shown in Fig. 3, the trapezoidal male screw 45 formed on the output rod 46 and the trapezoidal female screw 44 formed in the nut member 34 have teeth each having a trapezoidal sectional shape. The trapezoidal female screw 44 and the trapezoidal male screw 45 are constructed and disposed to form: a backlash b that is a gap, in the axial direction, between the trapezoidal female screw 44 and the trapezoidal male screw 45; a top clearance c3 that is a radial gap between a bottom land 44a of the trapezoidal female screw 44 and a top land 45a of the trapezoidal male screw 45; and a top clearance c4 between a top land 44b of the trapezoidal female screw 44 and a bottom land 45b of the trapezoidal male screw 45.

Gaps c1 and c2 shown in Fig. 2 are set such that the backlash b and the top clearances c3 and c4 are secured even when the output rod 46 is radially deviated in contact with at least one of the first bearing 48 and the second bearing 53.

The following describe behavior of the actuator 30 constructed in the aforementioned manner. As shown in Figs. 1 and 4, the output rod 46 is prevented from rotating about its axis, and thus, as the nut member 34 is driven to rotate via the reduction gear group 33, the rotational motion of the nut member 34 is converted into linear axial motion of the output rod 46. As the output rod 46 moves in the axial direction like this, the arm 26 axially moves together with the output rod 46 so that the movable sheave member 21 moves toward the fixed sheave member 15. As a consequence, the distance between the fixed sheave member 15 and the movable sheave member 21, and hence the winding diameter of the V-belt 22, varies.

Namely, as the output rod 46 moves rightward, the distance between the fixed sheave member 15 and the movable sheave member 21 increases, so that the winding diameter of the V-belt 22 decreases, as shown in Fig. 1. On the other hand, as the output rod 46 moves leftward, the distance between the fixed sheave member 15 and the movable sheave member 21 decreases, so that the winding diameter of the V-belt 22 increases, as shown in Fig. 4.

As shown in Figs. 1 and 4, the motor 32 is controlled by a control section 80 on the basis of a displaced amount of the arm 26 detected by a sensor 60. Namely, movement of the movable sheave member 21 is controlled using the displaced amount of the arm 26 as feedback information.

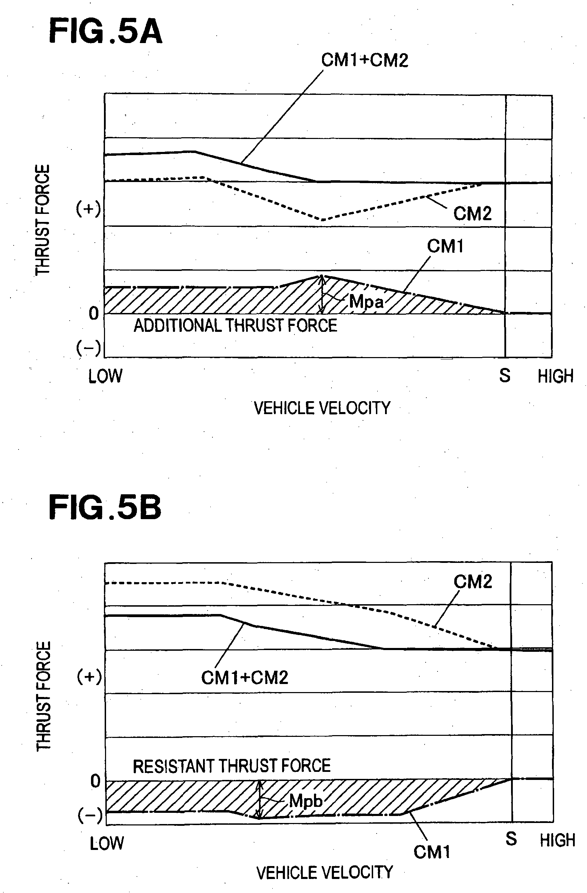

Next, with reference to Figs. 5A and 5B, a description will be given about an example manner in which the motor 32 is controlled by the control section 80.

Fig. 5A is a graph showing correlationship between vehicle velocity and thrust force in an eco (economical) mode that is a first gear change mode, while Fig. 5B is a graph showing correlationship between vehicle velocity and thrust force in a sport mode that is a second gear change mode. In these figures, CM1 represents thrust force with which the movable sheave member 21 is urged or driven toward the fixed sheave member 15 via the actuator 30, CM 2 represents thrust force with which the movable sheave member 21 is driven toward the fixed sheave member 15 via the centrifugal weights 19, and CM1+CM2 represents a sum of the thrust force CM1 and the thrust force CM2.

In the eco mode, as shown in Fig. 5A, the thrust force CM1 of the actuator 30 is increased above zero (0) at the time of shift-up (i.e., in a shift-up region at and below a predetermined vehicle velocity "S"). Namely, the motor 32 is controlled in such a manner that the actuator 30 generates additional thrust force to be added to the thrust force CM2 of the centrifugal weights 19. In this way, the movable sheave member 21 is positively driven toward the fixed sheave member 15 (i.e., to a high ratio side), so as to permit a smooth and prompt shift-up. As a result, fuel efficiency of the transmission can be enhanced.

In the sport mode, as shown in Fig. 5B, the thrust force CM1 of the actuator 30 is decreased below zero at the time of shift-up (i.e., in the shift-up region at and below the vehicle velocity S). Namely, the motor 32 is controlled in such a manner that the actuator 30 generates resistant thrust force to resist the thrust force CM2 of the centrifugal weights 19. In this way, the movable sheave member 21 is driven away from the fixed sheave member 15 (i.e., to a low ratio side) so as to restrain the shift-up than in the eco-mode. As a result, accelerating performance is enhanced, and hence sports travel of the vehicle is permitted.

By causing the motor 32 to function not only as a thrust assist means but also as a brake means to thereby effectively use the motor 32 in the two gear change modes, it is possible to reduce the size and capacity of the motor 32 and the overall size of the transmission. Further, if the motor 32 is reduced in size like this, it is also possible to reduce the weight and cost of the transmission and enhance the fuel efficiency.

Because the thrust force CM2 of the centrifugal weights 19 is a horizontal component of centrifugal force acting on the centrifugal weights 19, it is possible to change the intensity of the thrust force CM2 as desired by increasing or decreasing the mass of the centrifugal weights 19.

In the instant embodiment, the mass of the centrifugal weights 19 is set such that torque of the motor 32 necessary for generating a maximum value Mpa of the additional thrust force by means of the actuator 30 and torque of the motor 32 necessary for generating a maximum value Mpb of the resistant thrust force by means of the actuator 30 are substantially equal to each other. However, because the thrust force CM1 of the actuator 30 is influenced by a feed screw mechanism 43 without merely depending on the output of the motor 32 alone, the mass of the centrifugal weights 19 is set on the basis of screw efficiency of the feed screw mechanism 43. The feed screw mechanism 43 comprises the trapezoidal female screw 44 formed in the nut member 34 and the trapezoidal male screw 45 formed on the output rod 46.

The following describe the screw efficiency of the feed screw mechanism 43. Generally, the screw efficiency when rotational motion is converted into linear motion is called "forward efficiency", while the screw efficiency when linear motion is converted into rotational motion is called "backward efficiency".

Such forward efficiency and backward efficiency can be calculated by the following equations:

$$\text{forward efficiency} \quad \eta = (1 - \mu \tan \theta) / (1 + \mu / \tan \theta);$$

and

$$\text{backward efficiency} \quad \eta' = (1 - \mu / \tan \theta) / (1 + \mu \tan \theta)$$

In the equations above, $\mu$ represents a friction coefficient that is about 0.003 for a ball screw and about 0.1 for a trapezoidal screw, and $\theta$ represents a lead angle.

Table 1

| | friction coefficient $\mu$ | lead angle $\theta$ | forward efficiency $\eta$ | backward efficiency $\eta'$ |
|---|---|---|---|---|
| ball screw | 0.003 | 10 | 0.983 | 0.982 |
| Trapezoidal screw | 0.1 | 10 | 0.627 | 0.425 |

As shown in Table 1 above, if the respective screw efficiencies of the ball screw and trapezoidal screw are calculated assuming that the lead angle $\theta$ is 10°, it can be seen that, for the ball screw, the forward efficiency and the backward efficiency are substantially equal to each other because the friction coefficient $\mu$ is extremely small, and that, for the trapezoidal screw, the backward efficiency is smaller than the forward efficiency.

In the instant embodiment, where the trapezoidal screw whose backward efficiency is smaller than the forward efficiency is employed as the feed screw mechanism 43, it is difficult to rotate the nut member 34 from outside, and thus, the thrust force CM2 of the centrifugal weights 19 can be resisted using the backward efficiency of the trapezoidal screw in the sport mode. As a consequence, the torque of the motor 32 necessary for generating the maximum value Mpb of the resistant thrust force can be reduced. Because a load on the motor 32 can be reduced in the sport mode in this manner, it is possible to effectively reduce the size of the motor 32 by increasing the mass of the centrifugal weights 19 to thereby reduce a load on the motor 32 in the eco mode.

Further, by setting the mass of the centrifugal weights 19 such that the necessary torque of the motor 32 in the eco mode and the necessary torque of the motor 32 in the sport mode substantially equal each other, the necessary torque of the motor 32 in the two gear change modes can be reduced in a well-balanced manner, with the result that the motor 32 can be even further reduced in size.

In the case where the feed screw mechanism 43 comprises the ball screw in place of the trapezoidal screw, the mass of the centrifugal weights 19 is set such that the maximum value Mpa of the additional thrust force and the maximum value Mpb of the resistant thrust force substantially equal each other, because the forward efficiency and the backward efficiency of the ball screw are substantially equal to each other. Thus, the necessary torque of the motor 32 in the eco mode and the necessary torque of the motor 32 in the sport mode can be reduced in a well-balanced manner. Further, because both the forward efficiency and the backward efficiency of the ball screw are great, the motor 32 can be even further reduced in size.

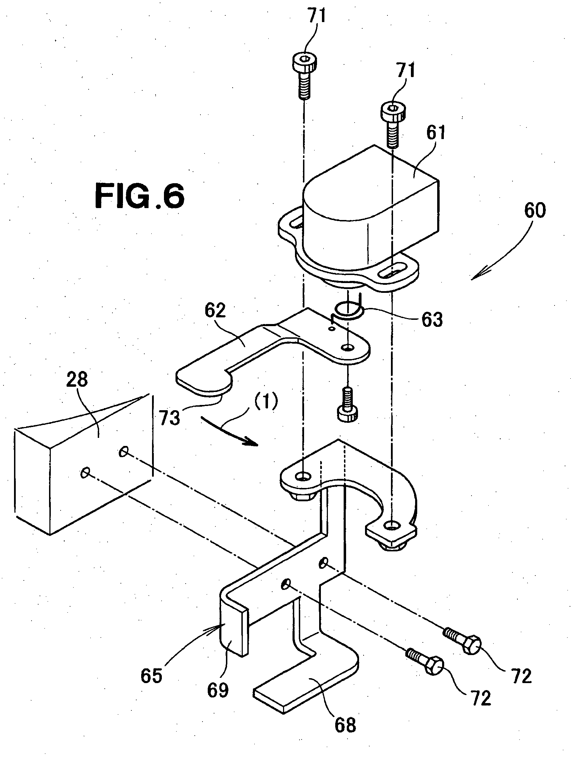

The following describe, with reference to Fig. 6, the sensor 60 employed in the instant embodiment. As shown in Fig. 6, the sensor 60 includes a rotary potentiometer 61, a lever 62 mounted on a rotation shaft of the rotary potentiometer 61, and a torsion spring 63 as a biasing member for normally biasing the lever 62 in a predetermined direction.

The torsion spring 63 is connected at one end to a case of the potentiometer 61 and at the other end to the lever 62 to normally bias the lever in a direction indicated by arrow (1).

However, if a biasing member corresponding to the torsion spring 63 is incorporated in the potentiometer 61, the torsion spring 63 of Fig. 6 provided outside the potentiometer 61 may be dispensed with. The biasing member may be other than the torsion spring, such as a compression spring, tension spring, rubber or elastic plastic member, or the like.

As shown in Figs. 1 and 4, the lever 62, by being normally biased by the torsion spring 63 in the direction indicated by arrow (1) (Fig. 6), has its distal end 73 abutted against the arm 26 in a direction opposite from a direction in which the arm 26 is assembled to the transmission case 28. Namely, whereas the arm 26 is assembled, together with the movable sheave member 21, into the transmission case 28 in the opposite direction from the arrow (1) direction, the lever 62 is abutted against the arm 26 in the direction indicated by arrow (1).

Thus, at the time of assembly of the sensor 60 and the arm 26 to the transmission case 28, it is only necessary to first assemble the sensor 60 to the transmission case 28 and then assemble the arm 26 to the transmission case 28 without a need for interconnecting the lever 62 and the arm 26. As a result, the instant embodiment achieves enhanced ease of assembly and maintenance, as well as cost reduction because the lever 62 and the arm 26 need not be interconnected.

The sensor 60 constructed in the aforementioned manner is accommodated within the transmission case 28 separately from (not integrally with) the actuator 30, as shown in Fig. 1. Thus, the actuator 30 can be reduced in size, so that the overall size of the transmission can be reduced. Further, because the sensor 60 is disposed in a region within the transmission case 28 opposite from the actuator 30 with the V-belt 22 interposed therebetween, a dead space within the transmission case 28 can be utilized effectively.

Further, in many transmission devices of this type, the sensor 60 is mounted on the actuator 60. In such a case, a position of the movable sheave member tends to be detected with poor accuracy due to, among other things, influences of a gap between the U-shaped groove 55 (Fig. 2) of the output rod 46 and the arm 26.

Therefore, the instant embodiment is constructed in such a manner that a displaced amount of the arm 26 moving together with the movable sheave member 21 is detected by the sensor 60, and thus, a position of the movable sheave member 21 can be detected with high accuracy without being adversely influenced by dimension errors and assembly errors of various component parts. As a consequence, movement of the movable sheave member 21 can be controlled with high accuracy, and enhanced fuel efficiency of the V-belt continuously variable transmission 10 can be achieved.

Further, because the displaced amount of the arm 26 is detected by the sensor 60, positioning of the sensor 60 within the transmission case 28 can be designed freely in accordance with a shape of the arm 26, so that the dead space within the transmission case 28 can be utilized effectively.

As shown in Fig. 6, the sensor 60 is connected to a bracket 65 by means of bolts 71 and fixed via the bracket 65 to the transmission case 28 by means of bolts 72. The bracket 65 integrally has a stopper 69 for abutting against the distal end 54 of the output rod 46 (Fig. 1) to prevent the movable sheave member 21 from moving beyond a regular use range. In this manner, it is possible to reduce the number of necessary component parts and hence necessary cost as compared to a case where the stopper 69 is provided separately from the bracket 65.

Further, the bracket 65 integrally has an anti-rotation section 68 for abutting against the arm 26 to thereby prevent the arm 26 from rotating about the bearing 24 beyond a predetermined range. Thus, assembly of the arm 26 and the output rod 46 of the actuator 30 can be significantly facilitated, so that ease of assembly and maintenance can be enhanced. Besides, it is possible to reduce the number of necessary component parts and hence necessary cost as compared to a case where the anti-rotation section 68 is provided separately from the bracket 65.

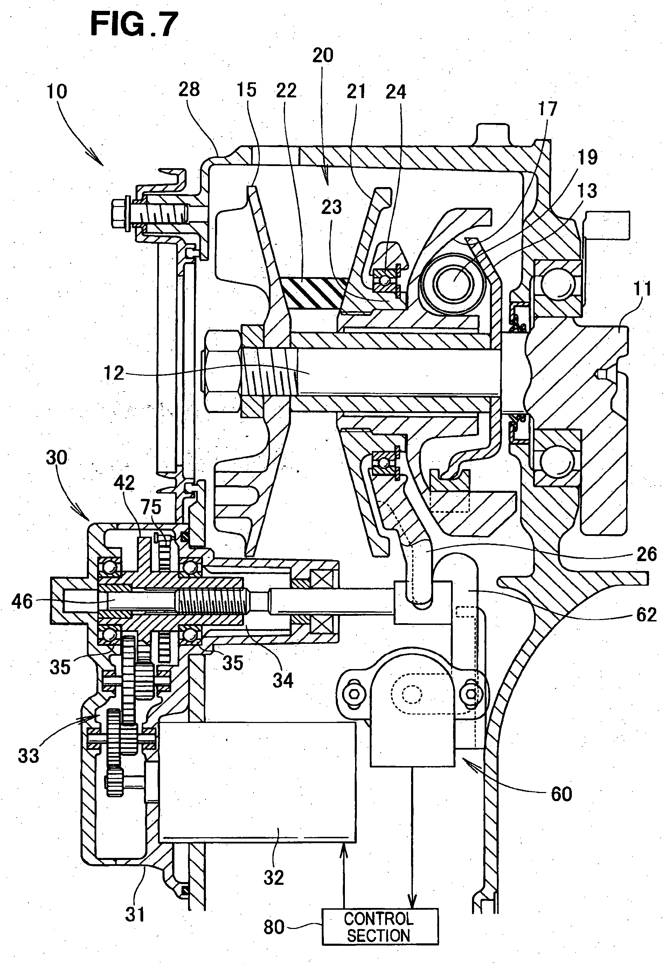

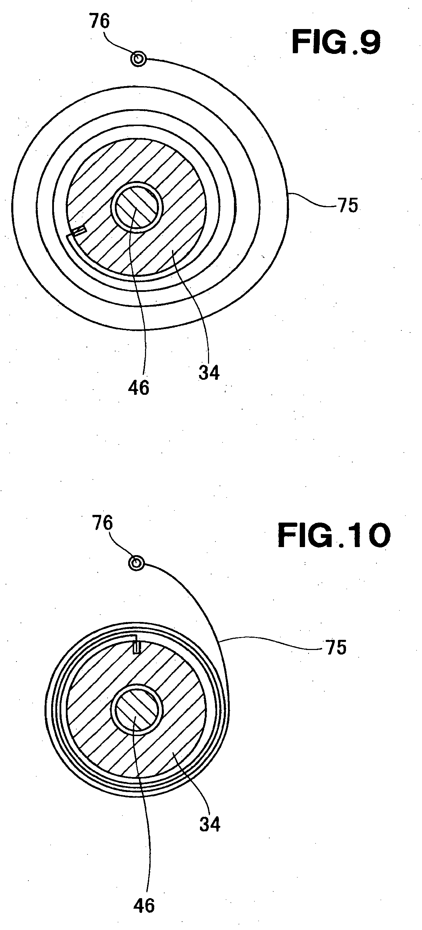

The following describe, with reference to Figs. 7 to 10, a modification of the V-belt continuously variable transmission 10 which is constructed to achieve further enhancement of fuel efficiency.

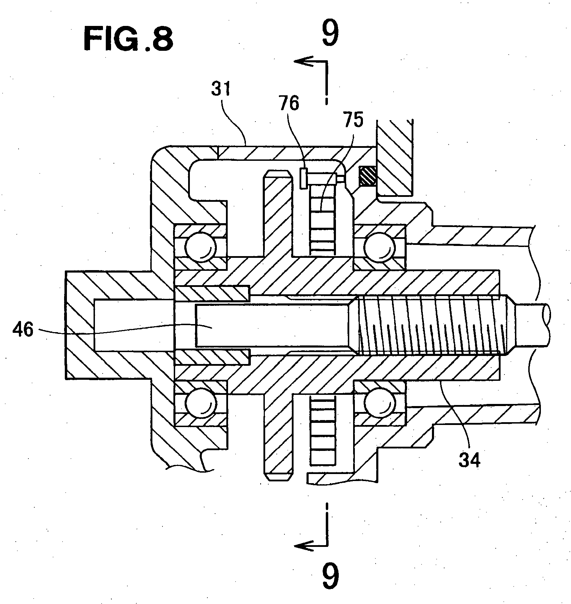

As shown in Figs. 7 and 8, for further enhancement of fuel efficiency, the actuator 30 in the V-belt continuously variable transmission 10 includes a flat spiral spring 75 as a biasing member.

As shown in Figs. 8 to 10, the flat spiral spring 75 is connected at one end to the actuator case 31 via a pin 76 and at the other end to the nut member 34. As the nut member 34 is driven by the motor 32 (Fig. 7) to rotate clockwise, the flat spiral spring 75 imparts counterclockwise rotational force to the nut member 34 by its resilient return force.

As such rotational force is imparted to the nut member 34 by the flat spiral spring 75, the output rod 46 is urged or driven axially, so that the movable sheave member 21 is driven away from the fixed sheave member 15 (i.e., driven to the low-ratio side) in such a manner as to increase the distance between the sheave members 15 and 21.

In the above-described embodiment, where the feed screw mechanism 43 between the output rod 46 and the nut member 34 comprises a trapezoidal screw, the necessary torque of the motor 32 increases, as compared to the case where the feed screw mechanism 43 comprises a ball screw, because the trapezoidal screw has a smaller screw efficiency than the ball screw (see Fig. 1). Thus, with the feed screw mechanism 43 comprising such a trapezoidal screw, power consumption of the actuator 30 would increase. In contrast, in the above-described modification, where the movable sheave member 21 is driven away from the fixed sheave member 15 (i.e., driven to the low-ratio side) by the flat spiral spring 75, the necessary torque of the motor 32 at the time of shift-down can be decreased, and thus, power consumption of the actuator 30 can be reduced. As a result, fuel efficiency of the V-belt continuously variable transmission 10 can be significantly enhanced.

Further, because the backward efficiency of the screw efficiency of the trapezoidal screw is smaller than the forward efficiency as shown in Table 1 above, a necessary load on the flat spiral spring 75 can be reduced more effectively by applying rotational force to the nut member 34 to drive the output rod 46 in the axial direction than by directly applying external force to the output rod 46 to drive the output rod 46 in the axial direction. As a result, the flat spiral spring 75 is rendered compact to thereby enable down-sizing of the actuator 30.

Whereas the embodiment has been described above in relation to the case where the feed screw mechanism 43 comprises a trapezoidal screw, the feed screw mechanism 43 may comprise any other suitable ordinary type of screw than a ball screw, such as a triangular screw or square screw. However, if the feed screw mechanism 43 comprises a triangular screw, the rotationally-driven amount of the nut member 34 would relatively increase because the triangular screw has a small lead, and thus, power consumption of the motor 32 would undesirably increase.

Further, the square screw can have an increased lead. But, if the feed screw mechanism 43 comprises such a square screw, the output rod 46 is likely to easily swing relative to the nut member 34 during operation, because the flank of the square screw lies perpendicularly to the axis of the square screw.

Further, the trapezoidal screw can have an increased lead, and the flank of the trapezoidal screw lies obliquely relative to the axis of the screw. Thus, if the feed screw mechanism 43 comprises such a trapezoidal screw, the output rod 46 is less likely to swing relative to the nut member 34 during operation, so that the output rod 46 can operate more smoothly. For these reasons, the trapezoidal screw is highly recommendable.

Furthermore, whereas the embodiment has been described above in relation to the case where the crankshaft 11 has the pulley shaft 12 formed integrally at one end of the crankshaft 11, the pulley shaft 12 may be constructed separately (i.e., as a separate member) from the crankshaft 11, and the crankshaft 11 and the pulley shaft 12 may be operatively interconnected via a transmission member, such as a belt, a gear or the like.

The basic principles of the present invention are well suited for application to continuously variable transmissions mounted on scooter-type vehicles.

**Claims**

1. A V-belt continuously variable transmission including
   a fixed sheave member (15) fixedly mounted on a pulley shaft (12),
   a movable sheave member (21) mounted on the pulley shaft (12) to be movable relative to the fixed sheave member (15),
   a V-belt (22) wound between the fixed and movable sheave members (15, 21),
   a centrifugal weight (19) for imparting thrust force to the movable sheave member (21) by action of centrifugal force corresponding to a rotating speed of the pulley shaft (12);
   an actuator (30) drivable by a motor (32) for imparting thrust force to the movable sheave member (21), and

a control section (80) for controlling the motor (32), the control section (80) controlling the motor (32) in a plurality of gear change modes including at least first and second gear change modes,

**characterized in that** in the first gear change mode, the control section (80) controls the motor (32) in such a manner that the actuator (30) generates additional thrust force to be added to the thrust force of the centrifugal weight (19) at the time of shift-up, and in the second gear change mode, the control section (80) controls the motor (32) in such a manner that the actuator (30) generates resistant thrust force to resist the thrust force of the centrifugal weight (19) at the time of shift-up.

2. The V-belt continuously variable transmission according to claim 1, wherein the actuator (30) includes a feed screw mechanism (43) for converting rotational output of the motor (32) into linear motion, and mass of the centrifugal weight (19) is set on a basis of screw efficiency of the feed screw mechanism (43).

3. The V-belt continuously variable transmission according to claim 2, wherein the feed screw mechanism (43) comprises a screw whose backward efficiency of the screw efficiency is smaller than forward efficiency of the screw efficiency, and, in the second gear change mode, the thrust force of the centrifugal weight (19) is resisted using the backward efficiency of the screw.

4. The V-belt continuously variable transmission according to claim 3, wherein the mass of the centrifugal weight (19) is set such that necessary torque of the motor (32) in the first gear change mode and necessary torque of the motor in the second gear change mode substantially equal each other.

5. The V-belt continuously variable transmission according to claim 2, wherein the feed screw mechanism (43) comprises a ball screw whose forward efficiency and backward efficiency of the screw efficiency are substantially equal to each other, and the mass of the centrifugal weight (19) is set such that the additional thrust force and the resistant thrust force generated by the actuator (30) substantially equal each other.

6. The V-belt continuously variable transmission according to claim 1, which further comprises:

a transmission case (28) accommodating therein the fixed sheave member (15), the movable sheave member (21) and the V-belt (22);
an arm (26) connected to the movable sheave member (21) via a bearing (24), the actuator (30) moving the movable sheave member (21) via the arm (26); and
a sensor (60) for detecting a displaced amount of the arm (26) that moves together with the movable sheave member (21), the sensor (60) being accommodated in the transmission case (28) separately from the actuator (30).

7. The V-belt continuously variable transmission according to claim 6, wherein the sensor (60) is disposed in a region within the transmission case (28) that is located opposite from the actuator (30) with the V-belt (22) interposed between the sensor (60) and the actuator (30).

8. The V-belt continuously variable transmission according to claim 6 or 7, wherein the sensor (60) includes a lever (62), and a biasing member (63) normally biasing the lever (62) in abutting engagement with the arm (26), the lever (62) being abutted against the arm (26) in a direction opposite from a direction where the arm (26) is assembled to the transmission case (28).

9. The V-belt continuously variable transmission according to claim 6, 7 or 8, which further comprises a bracket (65) fixing the sensor (60) to the transmission case (28), and wherein the bracket (65) integrally has a stopper (69) for preventing the movable sheave member (21) from moving beyond a regular use range.

10. The V-belt continuously variable transmission according to claim 6, 7, 8 or 9, which further comprises a bracket (65) fixing the sensor (60) to the transmission case (28), and wherein the bracket (65) integrally has an anti-rotation section (68) for preventing the arm (26) from pivoting about the bearing (24) beyond a predetermined range.

**Patentansprüche**

1. Stufenlos verstellbares Keilriemengetriebe, umfassend
ein feststehendes Rollenelement (15), das fest an einer Riemenscheibenwelle (12) befestigt ist, wobei ein bewegliches Rollenelement (21) an der Riemenscheibenwelle (12) derart befestigt ist, dass es in Bezug auf das feststehende Rollenelement (15) beweglich ist,

einen Keilriemen (22), der zwischen dem feststehenden und dem beweglichen Rollenelement (15, 21) gewickelt ist,

ein Fliehgewicht (19), um dem beweglichen Rollenelement (21) durch Einwirkung einer Fliehkraft, die einer Drehzahl der Riemenscheibenwelle (12) entspricht, eine Schubkraft zu verleihen,

einen Aktor (30), der von einem Motor (32) antreibbar ist, um dem beweglichen Rollenelement (21) eine Schubkraft zu verleihen, und

einen Steuerabschnitt (80) zum Steuern des Motors (32), wobei der Steuerabschnitt (80) den Motor (32) in mehreren Gangwechselmodi steuert, die mindestens einen ersten und einen zweiten Gangwechselmodus aufweisen,

**dadurch gekennzeichnet, dass** der Steuerabschnitt (80) im ersten Gangwechselmodus den Motor (32) derart steuert, dass der Aktor (30) eine zusätzliche Schubkraft erzeugt, die zu der Schubkraft des Fliehgewichts (19) beim Hochschalten hinzugefügt wird, und der Steuerabschnitt (80) im zweiten Gangwechselmodus den Motor (32) derart steuert, dass der Aktor (30) eine Widerstandsschubkraft erzeugt, um der Schubkraft des Fliehgewichts (19) beim Hochschalten entgegenzuwirken.

2. Stufenlos verstellbares Keilriemengetriebe nach Anspruch 1, wobei der Aktor (30) einen Vorschubspindelmechanismus (43) aufweist, um eine Drehausgabe des Motors (32) in eine lineare Bewegung umzuwandeln, und eine Masse des Fliehgewichts (19) auf einer Grundlage der Spindeleffizienz des Vorschubspindelmechanismus (43) eingestellt wird.

3. Stufenlos verstellbares Keilriemengetriebe nach Anspruch 2, wobei der Vorschubspindelmechanismus (43) eine Spindel umfasst, deren Rückwärtseffizienz der Spindeleffizienz geringer ist als die Vorwärtseffizienz der Spindeleffizienz und im zweiten Gangwechselmodus der Schubkraft (19) unter Verwendung der Rückwärtseffizienz der Spindel entgegengewirkt wird.

4. Stufenlos verstellbares Keilriemengetriebe nach Anspruch 3, wobei die Masse des Fliehgewichts (19) derart eingestellt ist, dass ein notwendiges Drehmoment des Motors (32) in dem ersten Gangwechselmodus und ein notwendiges Drehmoment des Motors in dem zweiten Gangwechselmodus im Wesentlichen gleich zueinander sind.

5. Stufenlos verstellbares Keilriemengetriebe nach Anspruch 2, wobei der Vorschubspindelmechanismus (43) eine Kugelumlaufspindel umfasst, deren Vorwärtseffizienz und Rückwärtseffizienz der Spindeleffizienz im Wesentlichen gleich zueinander sind, und die Masse des Fliehgewichts (19) derart eingestellt ist, dass die zusätzliche Schubkraft und die Widerstandsschubkraft, die von dem Aktor (30) erzeugt werden, im Wesentlichen gleich zueinander sind.

6. Stufenlos verstellbares Keilriemengetriebe nach Anspruch 1, ferner umfassend

ein Getriebegehäuse (28), das darin das feststehende Rollenelement (15), das bewegliche Rollenelement (21) und den Keilriemen (22) aufnimmt,

einen Arm (26), der mit dem beweglichen Rollenelement (21) über ein Lager (24) verbunden ist, wobei der Aktor (30) das bewegliche Rollenelement (21) über den Arm (26) bewegt, und

einen Sensor (60) zum Erkennen einer Verlagerungsmenge des Arms (26), der sich zusammen mit dem beweglichen Rollenelement (21) bewegt, wobei der Sensor (60) in dem Getriebegehäuse (28) separat von dem Aktor (30) untergebracht ist.

7. Stufenlos verstellbares Keilriemengetriebe nach Anspruch 6, wobei der Sensor (60) in einem Bereich innerhalb des Getriebegehäuses (28) angeordnet ist, der sich gegenüber von dem Aktor (30) befindet, wobei der Keilriemen (22) zwischen dem Sensor (60) und dem Aktor (30) angeordnet ist.

8. Stufenlos verstellbares Keilriemengetriebe nach Anspruch 6 oder 7, wobei der Sensor (60) einen Hebel (62) und ein Vorspannelement (63) aufweist, das normalerweise den Hebel (62) in Stoßeingriff mit dem Arm (26) vorspannt, wobei der Hebel (62) an den Arm (26) in einer Richtung anstößt, die einer Richtung entgegengesetzt ist, wo der Arm (26) an dem Getriebegehäuse (28) montiert ist.

9. Stufenlos verstellbares Keilriemengetriebe nach Anspruch 6, 7 oder 8, ferner umfassend eine Halterung (65), die den Sensor (60) an dem Getriebegehäuse (28) befestigt, wobei die Halterung (65) einstückig einen Stopper (69) aufweist, um zu verhindern, dass sich das bewegliche Rollenelement (21) über einen regulären Nutzungsbereich hinaus bewegt.

10. Stufenlos verstellbares Keilriemengetriebe nach Anspruch 6, 7, 8 oder 9, ferner umfassend eine Halterung (65), die den Sensor (60) an dem Getriebegehäuse (28) befestigt, wobei die Halterung (65) einstückig einen Drehschutzabschnitt (68) aufweist, um zu verhindern, dass der Arm (26) über einen regulären Bereich hinaus um das Lager (24) schwenkt.

**Revendications**

1. Transmission à variation continue à courroie trapézoïdale comprenant
   un élément de poulie fixe (15) monté de façon fixe sur un arbre de poulie (12),
   un élément de poulie mobile (21) monté sur l'arbre de poulie (12) afin d'être mobile par rapport à l'élément de poulie fixe (15),
   une courroie trapézoïdale (22) enroulée entre les éléments de poulie fixe et mobile (15, 21),
   une masselotte (19) destinée à appliquer une force de poussée sur l'élément de poulie mobile (21) grâce à l'action de la force centrifuge correspondant à une vitesse de rotation de l'arbre de poulie (12) ;
   un dispositif d'actionnement (30) pouvant être entraîné par un moteur (32) afin d'appliquer une force de poussée sur l'élément de poulie mobile (21), et
   une section de commande (80) destinée à commander le moteur (32), la section de commande (80) commandant le moteur (32) dans une pluralité de modes de changement de vitesse comprenant au moins des premier et deuxième modes de changement de vitesse,
   **caractérisée en ce que**, dans le premier mode de changement de vitesse, la section de commande (80) commande le moteur (32) d'une manière telle que le dispositif d'actionnement (30) génère une force de poussée additionnelle devant être ajoutée à la force de poussée de la masselotte (19) au moment du changement de vitesses, et dans le deuxième mode de changement de vitesse, la section de commande (80) commande le moteur (32) d'une manière telle que le dispositif d'actionnement (30) génère une force de poussée résistante pour résister à la force de poussée de la masselotte (19) au moment de la commande de changement de vitesse.

2. Transmission à variation continue à courroie trapézoïdale selon la revendication 1, dans laquelle le dispositif d'actionnement (30) comprend un mécanisme de vis d'entrée (43) destinée à convertir une sortie de rotation du moteur (32) en un mouvement linéaire, et une masse de la masselotte (19) est établie sur la base du rendement de vis du mécanisme de vis d'entrée (43).

3. Transmission à variation continue à courroie trapézoïdale selon la revendication 2, dans laquelle le mécanisme de vis d'entrée (43) comporte une vis dont le rendement de conversion linéaire-rotatif du rendement de vis est plus petit que le rendement de conversion rotatif-linéaire du rendement de vis, et, dans le deuxième mode de changement de vitesse, la force de poussée de la masselotte (19) subit une résistance en utilisant le rendement de conversion linéaire-rotatif de la vis.

4. Transmission à variation continue à courroie trapézoïdale selon la revendication 3, dans laquelle la masse de la masselotte (19) est établie de telle sorte qu'un couple nécessaire du moteur (32) dans le premier mode de changement de vitesse et un couple nécessaire du moteur dans le deuxième mode de changement de vitesse sont sensiblement égaux.

5. Transmission à variation continue à courroie trapézoïdale selon la revendication 2, dans laquelle le mécanisme de vis d'entrée (43) comporte une vis à billes dont le rendement de conversion rotatif-linéaire et le rendement de conversion linéaire-rotatif du rendement de vis sont sensiblement égaux, et la masse de la masselotte (19) est établie de telle sorte que la force de poussée additionnelle et la force de poussée résistante générées par le dispositif d'actionnement (30) sont sensiblement égales.

6. Transmission à variation continue à courroie trapézoïdale selon la revendication 1, qui comporte en outre :

   un carter de transmission (28) recevant à l'intérieur l'élément de poulie fixe (15), l'élément de poulie mobile (21) et à la courroie trapézoïdale (22) ;
   un bras (26) relié à l'élément de poulie mobile (21) par l'intermédiaire d'un palier (24), le dispositif d'actionnement (30) déplaçant l'élément de poulie mobile (21) par l'intermédiaire du bras (26) ; et
   un capteur (60) destiné à détecter une quantité déplacée du bras (26) qui se déplace avec l'élément de poulie mobile (21), le capteur (60) étant reçu dans le carter de transmission (28) séparément du dispositif d'actionnement (30).

**7.** Transmission à variation continue à courroie trapézoïdale selon la revendication 6, dans laquelle le capteur (60) est disposé dans une zone dans le carter de transmission (28) qui se trouve à l'opposé du dispositif d'actionnement (30) avec la courroie trapézoïdale (22) interposée entre le capteur (60) et le dispositif d'actionnement (30).

**8.** Transmission à variation continue à courroie trapézoïdale selon la revendication 6 ou 7, dans laquelle le capteur (60) comprend un levier (62), et un élément de rappel (63) qui rappelle normalement le levier (62) en engagement de butée avec le bras (26), le levier (62) étant en butée contre le bras (26) dans une direction opposée à une direction où le bras (26) est assemblé sur le carter de transmission (28).

**9.** Transmission à variation continue à courroie trapézoïdale selon la revendication 6, 7 ou 8, qui comporte en outre un support (65) qui fixe le capteur (60) sur le carter de transmission (28), et dans laquelle le support (65) a d'un seul tenant une butée (69) destinée à empêcher l'élément de poulie mobile (21) de se déplacer au-delà d'une plage d'utilisation régulière.

**10.** Transmission à variation continue à courroie trapézoïdale selon la revendication 6, 7, 8 ou 9, qui comporte en outre un support (65) qui fixe le capteur (60) sur le carter de transmission (28), et dans laquelle le support (65) a d'un seul tenant une section anti-rotation (68) destinée à empêcher le bras (26) de pivoter autour du palier (24) au-delà d'une plage prédéterminée.

# FIG.1

CONTROL
SECTION

FIG.2

# FIG.3

# FIG.4

CONTROL
SECTION

## FIG.5A

CM1+CM2

THRUST FORCE

(+)

CM2

CM1

Mpa

0

ADDITIONAL THRUST FORCE

(−)

LOW                                                    S    HIGH

VEHICLE VELOCITY

## FIG.5B

CM2

THRUST FORCE

(+)

CM1+CM2

RESISTANT THRUST FORCE

0

Mpb

(−)

LOW                                                    S    HIGH

CM1

VEHICLE VELOCITY

## FIG.6

# FIG.7

CONTROL
SECTION

# FIG.8

76

**FIG.9**

75

46    34

76

**FIG.10**

75

34

46

# FIG.11A

VEHICLE VELOCITY (km/h)

# FIG.11B

VEHICLE VELOCITY (km/h)

**EP 2 784 357 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012047292 A

- JP 2009079759 A